# EUROPEAN PATENT APPLICATION

(11) **EP 0 763 689 A1**
(43) Date of publication of application: **19.03.1997**
(21) Application number: 96306642.8
(22) Date of filing: 12.09.1996
(51) Int. Cl.: F16L 55/10

(54) **Breakaway coupling**

(30) Priority: 16.09.1995 GB 9519003
(71) Applicant: Dover Corporation, New York, NY 10017-1292 (US)
(72) Inventor: Thomson, Jack Gall, West Bridgford, Nottingham NG2 5EB (GB)
(74) Representative: Dealtry, Brian

(57) **Abstract**

A breakaway fluid coupling including first and second coupling parts (11,14) which are separable from one another in a given direction when exposed to a separating force in excess of a predetermined force, the first and second parts being rotatable relative to one another about an axis parallel to said given direction and being retained together by releasable means (31,32) adapted to permit separation of said coupling parts in said given direction when exposed to said separating force, valve means (60) being located within one coupling part and being movable between a normally open position and a closed position, the valve means in said open position permitting flow of fluid through the coupling part and in said closed position preventing flow of fluid through the coupling part, valve operating means (63) arranged to retain the valve means at the open position, the valve operating means being operatively connected to the first and second coupling parts to permit the valve means to move to its closed position when the coupling parts have moved apart under said separating force by a predetermined distance.

## Description

The present invention relates to a breakaway coupling, in particular but not exclusively, a breakaway coupling suitable for connecting a fuel nozzle to a hose.

When using a fuel nozzle to fill fuel into the fuel tank of a vehicle, it is possible for the operative to leave the nozzle in the fuel tank inlet and drive away. This can cause the hose to rupture and cause a spillage of fuel. Subsequently, the damaged hose needs to be replaced.

One of the aims of the present invention is to provide a fluid coupling which will break apart when exposed to a pull in excess of a predetermined linear force and will seal off flow of fluid through at least one part of the coupling.

According to one aspect of the present invention there is provided a breakaway fluid coupling including first and second coupling parts which are separable from one another in a given direction when exposed to a separating force in excess of a predetermined force, the first and second parts being rotatable relative to one another about an axis parallel to said given direction and being retained together by releasable means adapted to permit separation of said coupling parts in said given direction when exposed to said separating force, valve means being located within one coupling part and being movable between a normally open position and a closed position, the valve means in said open position permitting flow of fluid through the coupling part and in said closed position preventing flow of fluid through the coupling part, valve operating means arranged to retain the valve means at the open position, the valve operating means being operatively connected to the first and second coupling parts to permit the valve means to move to its closed position when the coupling parts have moved apart under said separating force by a predetermined distance.

Preferably the coupling parts have respective co-operating male and female portions which are telescopically engaged, seal means preferably being provided between the co-operating male and female portions so as to maintain a seal therebetween whilst the co-operating male and female portions are telescopically engaged. Preferably the length of telescopic engagement exceeds said predetermined distance.

Preferably the coupling parts are rotatably interconnected such that the first and second coupling parts are rotatable relative to one another about an axis parallel to said given direction.

Preferably the releasable means comprises a clamp assembly located internally of the coupling parts, the clamp assembly including a first clamp member in engagement with the first coupling part and a second clamp member in engagement with the second coupling part, the first and second clamp members being held together by frangible means which on exposure to said separable force permit the clamp members to move apart.

Various aspects of the present invention are hereinafter described with reference to the accompanying drawings, in which:-
Figure 1 is an axial cross-sectional view of a coupling according to one embodiment of the present invention;
Figure 2 is a schematic exploded view of the coupling in Figure 1 and including a modification;
Figure 3 is a schematic exploded view of a modified valve operating means for incorporation into the coupling of Figure 1;
Figure 4 is a schematic exploded view of another modified valve operating means for incorporation into the coupling of Figure 1.

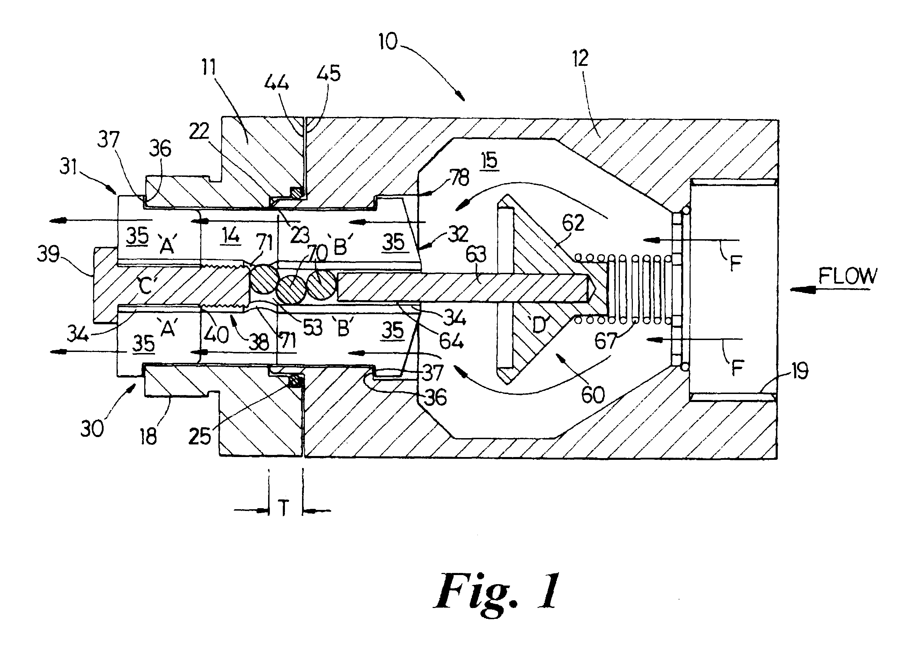

Referring initially to Figure 1 there is shown a fluid coupling 10 including a first coupling part 11 secured to a second coupling part 12.

Coupling part 11 has an internal bore 14 aligned with an internal bore 15 formed in the coupling part 12. The bores 14 and 15 define a fluid flow path through the coupling 10 as indicated by the flow lines F.

Coupling part 11 is provided with an externally screw threaded shaft portion to which a fuel nozzle (not shown) may be attached. Coupling part 12 is provided with an internally screw threaded bore portion 19 to which a fluid hose (not shown) may be attached.

Coupling parts 11, 12 include co-operating female and male portions 22, 23 which are telescopically engaged. The portions 22, 23 remain telescopically engaged for the distance T which in the illustrated embodiment corresponds approximately to the axial length of the male portion 23. The telescopic engagement between the female and male portions 22, 23 enable coupling parts 11, 12 to rotate relative to one another about their aligned axes and also enable coupling parts 11, 12 to move axially apart.

A seal 25 is provided, preferably on the female portion, for maintaining a fluid seal between portions 22, 23 whilst they remain telescopically engaged, ie. whilst the parts 11, 12 have not moved apart from the position shown in Figure 1 by a distance exceeding distance T. Accordingly, a fluid seal is obtained whilst the coupling parts are telescopically engaged irrespective of whether the coupling parts rotate or move axially relative to one another.

The coupling parts 11, 12 are retained in an assembled condition, ie. restrained from separating in an axial direction, by a clamp assembly 30 which does not restrain relative rotation between the coupling parts. The clamp assembly 30 comprises a first clamp member 31 and a second clamp member 32. Both clamp members 31, 32 include a central elongate body 34 supporting radially outwardly extending fins 35. The fins 35 are rebated to define an annular seat for centrally locating the clamp member 31, 32 within its associated bore 14, 15 respectively and to define a radially extending shoulder 36 for abutment against an opposed shoulder 37 formed in the associated coupling part 11, 12 respectively. The body 34 of clamp member 31 includes an axially extending bore through which extends a fastening bolt 39. The central body 34 of clamp member 32 include an axial extension 38 which includes an internally threaded portion into which the fastening bolt 39 is screwed. As shown in Figure 1, the axial end face 40 of the extension 38 abuts against the axial end of body 34 of clamp member 31 when the bolt 39 is fully tightened and thereby defines the axial distance between the shoulders 36 of members 31, 32. Preferably this distance is chosen to be slightly greater than the axial distance between shoulders 37 on coupling parts 11, 12. Accordingly, opposed axial faces 44, 45 of coupling parts 11, 12 are not pressed together, thereby enabling parts 11, 12 to freely rotate relative to one another about an axis defined by the co-operating female and male portions 22, 23.

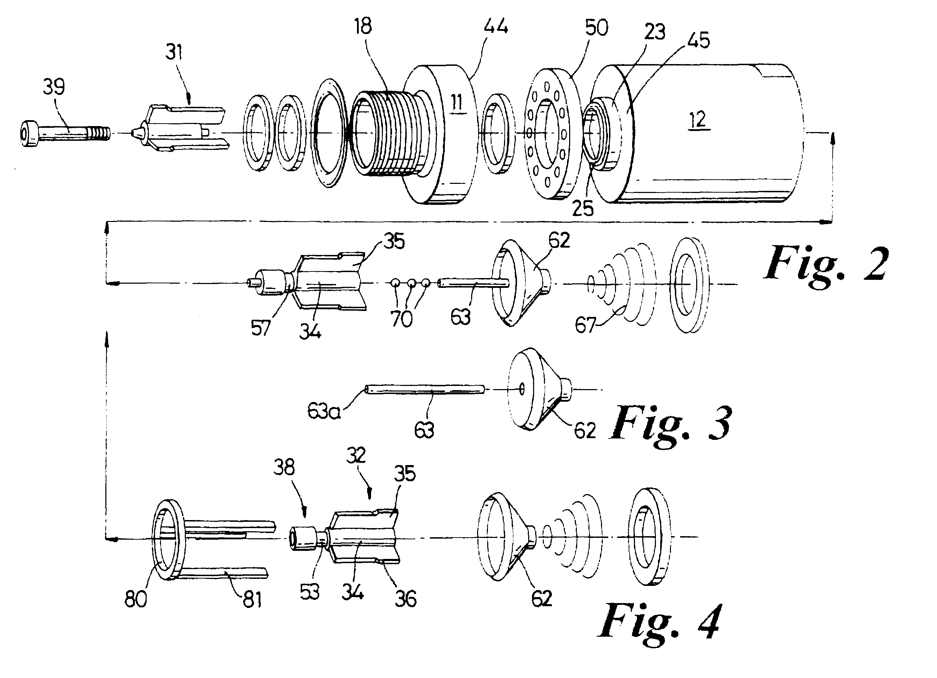

As shown in Figure 2, a thrust bearing assembly 50 may be interposed between the opposed axial faces 44, 45.

The threaded portion of the extension 38 is connected to the body 34 by a frangible means defined by a weakened portion 53 which is designed to stretch and break when exposed to an axially directed pulling force (ie. a separating force) exceeding a predetermined force.

Valve means 60 are located within coupling part 12 at a location upstream from the clamp assembly 30. The valve means 60 preferably comprises a conically shaped valve member 62 mounted on a shaft or push rod 63 which is slidably received in a central bore 64 formed in body 34 of clamp member 32. A spring 67 is preferably provided for urging the valve member 62 and shaft 63 axially toward coupling part 11. A plurality of balls 70 (three shown in Figure 1 but more or less may be used if desired) are located between the terminal end of shaft 63 and the bolt 37. A series of apertures 71 are provided in the weakened portion 53, the apertures being large enough to enable the balls to pass therethrough. However the bolt 39 is arranged to project slightly past the apertures 71 so as to close them sufficiently to prevent passage of the balls therethrough.

In use, coupling part 11 is attached to a fluid nozzle (not shown) and coupling part 12 is attached to a fluid hose (not shown). If a separating force greater than a predetermined force acts to separate parts 11 and 12, the weakened portion 53 initially stretches and subsequently breaks if the force continues long enough.

On stretching, the apertures 71 are deformed and the balls 70 are forced therethrough by fluid pressure acting on the valve member 62 and by spring 67.

Preferably the amount of stretch of weakened portion 53 necessary to release the balls is chosen to be less than the distance T. This means that the valve member 62 is released to move from its open position (as shown in Figure 1) to its closed position where at it is sealingly seated on valve seat 78 before the coupling parts 11, 12 have completely separated. Accordingly, should the separating force only be applied long enough to cause stretch of the weakened portion 53 and not breakage, then the valve member 62 will close off flow indicating that a fault has occurred. At this time the coupling parts 11, 12 are still sealingly connected by seal 25.

In the embodiment shown in Figure 1, the use of balls 70 enables a relatively short shaft 63 to be used such that after separation of the coupling parts, the shaft 63 does not protrude beyond body 34 of clamp member 32.

As indicated in Figure 3, a longer shaft 63 may be used with the balls 70 being dispensed with. With such an arrangement the terminal end 63a of shaft 63 directly abuts against bolt 37 to hold the valve member 62 at its open position.

In the embodiment of Figure 4, shaft 63 is dispensed with and replaced by an annular body 80 having axially extending fingers 81. The annular body 80 is located within bore 14 of coupling part 11 with the fingers 81 extending axially along bore 15 to engage the outer periphery of the valve member 62. On separation of the coupling parts 11, 12 the annular body 80 moves with coupling part 11 and so release the valve member 62 to permit it to move to its closed position.

Preferably, both clamp members 31, 32 are extruded from a suitable metal such as brass and the weakened portion 53 is preferably formed by a machining operation to define a waisted portion of desired wall thickness.

## Claims

1. A breakaway fluid coupling including first and second coupling parts which are separable from one another in a given direction when exposed to a separating force in excess of a predetermined force, the first and second parts being rotatable relative to one another about an axis parallel to said given direction and being retained together by releasable means adapted to permit separation of said coupling parts in said given direction when exposed to said separating force, valve means being located within one coupling part and being movable between a normally open position and a closed position, the valve means in said open position permitting flow of fluid through the coupling part and in said closed position preventing flow of fluid through the coupling part, valve operating means arranged to retain the valve means at the open position, the valve operating means being operatively connected to the first and second coupling parts to permit the valve means to move to its closed position when the coupling parts have moved apart under said separating force by a predetermined distance.

2. A fluid coupling according to claim 1 wherein the coupling parts have respective co-operating male and female portions which are telescopically engaged to enable the coupling parts to be rotated and axially moved relative to one another.

3. A fluid coupling according to claim 2 wherein seal means are provided between the co-operating male and female portions to maintain a fluid seal therebetween whilst the co-operating male and female portions are telescopically engaged.

4. A fluid coupling according to claim 2 or 3 wherein the length of the telescopic engagement exceeds said predetermined distance.

5. A fluid coupling according to any preceding claim wherein the releasable means comprise a clamp assembly located internally of the coupling parts, the clamp assembly including a first clamp member in engagement with the first coupling part and a second clamp member in engagement with the second coupling part, the first and second clamp members being held together by frangible means which on exposure to said separable force permit the clamp members to move apart.

6. A fluid coupling according to claim 5 wherein the first and second clamp members each include a central elongate body supporting radially outwardly extending fins, the fins of the first clamp member having a shoulder for engagement with an opposed shoulder formed on one coupling part and the fins of the second clamp member having a shoulder for engagement with an opposed shoulder formed on the other coupling part.

7. A fluid coupling according to claim 6 wherein the central elongate body of the first clamp member and the central elongate body of the second clamp member axially abut one another to define the distance between said shoulders on the first and second clamp members.

8. A fluid coupling according to claim 5 or 6 wherein one of the elongate bodies includes a terminal end portion separated from the remainder of the elongate body by a weakened portion which defines said frangible means.

9. A fluid coupling according to claim 8, wherein the valve operating means comprises a shaft slidably located within an axial bore formed in said one of the elongate bodies, the shaft at one end being in engagement with said valve means and at its opposite end being in engagement with said terminal end portion.

10. A fluid coupling according to any preceding claim wherein a thrust bearing assembly is located between the coupling parts.
